# EUROPEAN PATENT APPLICATION

(11) **EP 4 651 088 A1**
(43) Date of publication of application: **19.11.2025**
(21) Application number: 24305761.9
(22) Date of filing: 16.05.2024
(51) Int. Cl.: G06T 13/40

(54) **AVATAR ANIMATION PARAMETERS PREDICTOR SIGNALING**

(71) Applicant: InterDigital CE Patent Holdings, SAS, 75017 Paris (FR)
(72) Inventor: GOSSELIN, Philippe Henri, 35235 Thorigne-Fouillard (FR); COVA REGATEIRO, João Pedro, 35220 Chateaubourg (FR); LE CLERC, Francois, 35590 L'Hermitage (FR)
(74) Representative: Vossius & Partner Patentanwälte Rechtsanwälte mbB

(57) **Abstract**

In one implementation, a user device may obtain an avatar model and a list of functions to be performed with associated parameters. For each function in the list of functions, the user device may create the function with associated parameters and execute the function to obtain processed data as input to next function in the list of functions when a current function is not a last function in the list of functions or as output parameters when the current function is the last function in the list of functions. Then the user device may animate the avatar model based on the output parameters. At the server side, for an avatar model, the server can generate the list of functions and associated parameters given a user input type and a prediction method, and transmit them to the user device.

## Description

### TECHNICAL FIELD

The present embodiments generally relate to the signaling of a process to predict the animation parameters of an avatar for 3D scene representations.

### BACKGROUND

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way that is consistent with the user context (environment, point of view, device, etc.). Scene graphs (such as the one proposed by Khronos / glTF (Graphics Language Transmission Format) and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand. Scene description frameworks ensure that the timed media and the corresponding relevant virtual content are available at any time during the rendering of the application. Scene descriptions can also carry data at scene level describing how a user can interact with the scene objects at runtime for immersive XR experiences.

### SUMMARY

According to one embodiment, a method is presented, comprising: obtaining an avatar model; obtaining information indicating a list of functions to be performed; obtaining parameters associated with functions in the list of functions; for each function in the list of functions, creating the function with associated parameters, and executing the function to obtain processed data as input to next function in the list of functions when a current function is not a last function in the list of functions or as output parameters when the current function is the last function in the list of functions; and animating the avatar model based on the output parameters.

According to one embodiment, a method is presented, comprising: obtaining an avatar model; obtaining a user input type and a prediction method; generating information indicating a list of functions based on the user input type and the prediction method; generating parameters associated with functions in the list of functions, wherein output of a function in the list of functions is to be used as input to next function in the list of functions when a current function is not a last function in the list of functions, and wherein a last function in the list of functions corresponds to a function to infer animation parameters of the avatar model; and outputting the information indicating the list of functions and the associated parameters.

According to another embodiment, an apparatus is presented, comprising one or more processors and at least one memory coupled to the one or more processors, wherein the one or more processors are configured to: obtain an avatar model; obtain information indicating a list of functions to be performed; obtain parameters associated with functions in the list of functions; for each function in the list of functions, create the function with associated parameters, and execute the function to obtain processed data as input to next function in the list of functions when a current function is not a last function in the list of functions or as output parameters when the current function is the last function in the list of functions; and animate the avatar model based on the output parameters.

According to another embodiment, an apparatus is presented, comprising one or more processors and at least one memory coupled to the one or more processors, wherein the one or more processors are configured to: obtain an avatar model; obtain a user input type and a prediction method; generate information indicating a list of functions based on the user input type and the prediction method; generate parameters associated with functions in the list of functions, wherein output of a function in the list of functions is to be used as input to next function in the list of functions when a current function is not a last function in the list of functions, and wherein a last function in the list of functions corresponds to a function to infer animation parameters of the avatar model; and output the information indicating the list of functions and the associated parameters.

One or more embodiments also provide a computer program comprising instructions which when executed by one or more processors cause the one or more processors to perform the method according to any of the embodiments described herein. One or more of the present embodiments also provide a computer readable storage medium having stored thereon instructions for signaling the animation parameters predictor according to the methods described herein.

One or more embodiments also provide a computer readable storage medium having stored thereon signaling of the animation parameters predictor generated according to the methods described above. One or more embodiments also provide a method and apparatus for transmitting or receiving the signaling of the animation parameters predictor generated according to the methods described herein.

### BRIEF DESCRIPTION OF THE DRAWINGS

FIG. 1 shows an example architecture of an XR processing engine.
FIG. 2 shows an example of the syntax of a data stream encoding an extended reality scene description.
FIG. 3 shows an example graph of an extended reality scene description.
FIG. 4 illustrates the execution of animation parameter prediction using proposed signaled data and user inputs, according to an embodiment.
FIG. 5 illustrates a method for the execution of a processing step, according to an embodiment.
FIG. 6 illustrates a method for the execution of a preprocessing step, according to an embodiment.
FIG. 7 illustrates a method for the execution of a postprocessing step, according to an embodiment.
FIG. 8 illustrates an example of signaling of an avatar animation parameters prediction based on MoFA, according to an embodiment.
FIG. 9 illustrates the distribution of the avatar models and avatar parameters predictor on the server side, according to an embodiment.
FIG. 10 illustrates the distribution of the avatar models and avatar parameters predictor on the user device side, according to an embodiment.

### DETAILED DESCRIPTION

Various XR applications may apply to different context and real or virtual environments. For example, in an industrial XR application, a virtual 3D content item (e.g., a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale defined relatively to the detected reference image. In another application, some audio file might start playing when the user enters an area close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, bird characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger. Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree comprises only virtual objects descriptions.

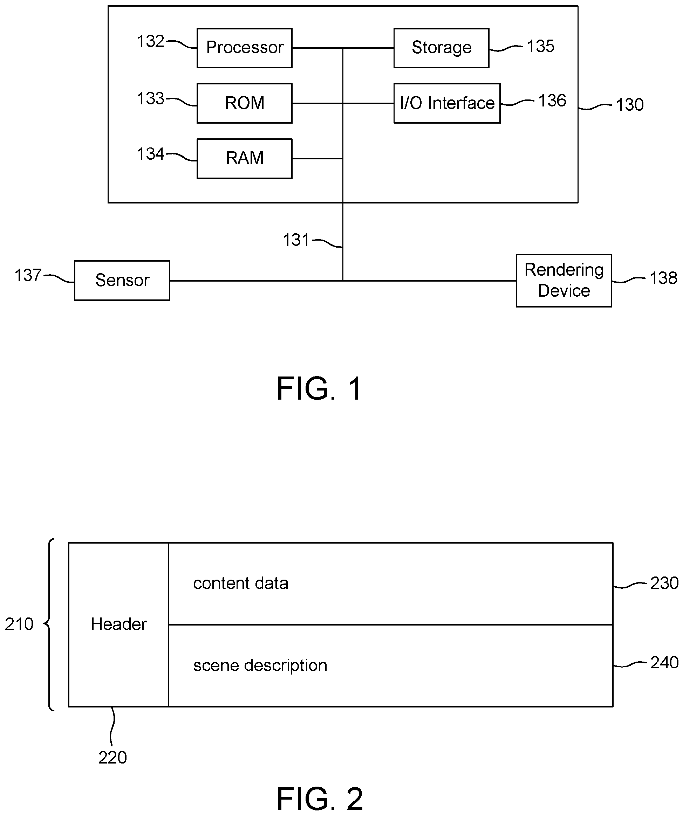

FIG. 1 shows an example architecture of an XR processing engine 130 which may be configured to implement the methods described herein. A device according to the architecture of FIG. 1 is linked with other devices via their bus 131 and/or via I/O interface 136.

Device 130 comprises the following elements that are linked together by a data and address bus 131:
- a microprocessor 132 (or CPU), which is, for example, a DSP (or Digital Signal Processor);
- a ROM (or Read Only Memory) 133;
- a RAM (or Random Access Memory) 134;
- a storage interface 135;
- an I/O interface 136 for reception of data to transmit, from an application; and
- a power supply (not represented in FIG. 1), e.g., a battery.

In accordance with an example, the power supply is external to the device. In each of mentioned memory, the word "register" used in the specification may correspond to area of small capacity (some bits) or to very large area (e.g., a whole program or large amount of received or decoded data). The ROM 133 comprises at least a program and parameters. The ROM 133 may store algorithms and instructions to perform techniques in accordance with present principles. When switched on, the CPU 132 uploads the program in the RAM and executes the corresponding instructions.

The RAM 134 comprises, in a register, the program executed by the CPU 132 and uploaded after switch-on of the device 130, input data in a register, intermediate data in different states of the method in a register, and other variables used for the execution of the method in a register.

Device 130 is linked, for example via bus 131 to a set of sensors 137 and to a set of rendering devices 138. Sensors 137 may be, for example, cameras, microphones, temperature sensors, Inertial Measurement Units, GPS, hygrometry sensors, IR or UV light sensors or wind sensors. Rendering devices 138 may be, for example, displays, speakers, vibrators, heat, fan, etc.

In accordance with examples, the device 130 is configured to implement a method according to the present principles, and belongs to a set comprising:
- a mobile device;
- a communication device;
- a game device;
- a tablet (or tablet computer);
- a laptop;
- a still picture camera; and
- a video camera.

In XR applications, scene description is used to combine explicit and easy-to-parse description of a scene structure and some binary representations of media content. FIG. 2 shows an example of the syntax of a data stream encoding an extended reality scene description. FIG. 2 shows an example structure 210 of an XR scene description. The structure consists in a container which organizes the stream in independent elements of syntax. The structure may comprise a header part 220 which is a set of data common to every syntax element of the stream. For example, the header part comprises some of metadata about syntax elements, describing the nature and the role of each of them. The structure also comprises a payload comprising an element of syntax 230 and an element of syntax 240. Syntax element 230 comprises data representative of the media content items described in the nodes of the scene graph related to virtual elements. Images, meshes and other raw data may have been compressed according to a compression method. Element of syntax 240 is a part of the payload of the data stream and comprises data encoding the scene description as described according to the present principles.

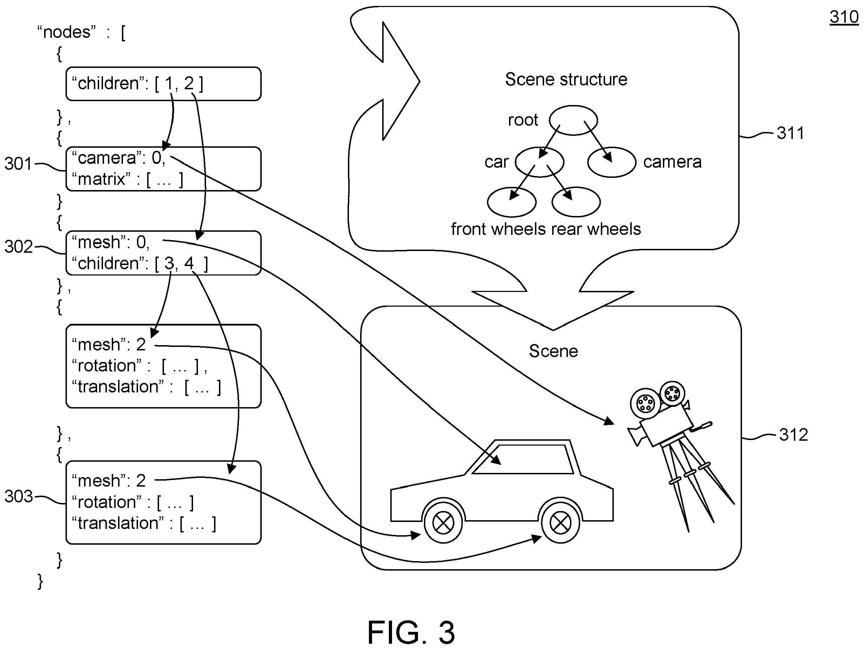

FIG. 3 shows an example graph 310 of an extended reality scene description. In this example, the scene graph may comprise a description of real objects, for example 'plane horizontal surface' (that can be a table or a road) and a description of virtual objects 312, for example an animation of a car. Scene description is organized as an array of nodes. A node can be linked to child nodes to form a scene structure 311. A node can carry a description of a real object (e.g., a semantic description) or a description of a virtual object. In the example of FIG. 3, node 301 describes a virtual camera located in the 3D volume of the XR application. Node 302 describes a virtual car and comprises an index of a representation of the car, for example an index in an array of 3D meshes. Node 303 is a child of node 302 and comprises a description of one wheel of the car. The same way, it comprises an index to the 3D mesh of the wheel. The same 3D mesh may be used for several objects in the 3D scene as the scale, location and orientation of objects are described in the scene nodes. Scene graph 310 also comprises nodes that are a description of the spatial relation between the real objects and the virtual objects.

In time-based media streaming, the scene description itself can be time-evolving to provide the relevant virtual content for each sequence of a media stream. For instance, for advertising purpose, a virtual bottle can be displayed on a table during a video sequence where people are seated around the table. This kind of behavior can be achieved by relying on the framework defined in the Scene Description for MPEG media document.

Currently, the MPEG-I Scene Description framework uses "behavior" data to augment the time-evolving scene description and provides description of how a user can interact with the scene objects at runtime for immersive XR experiences. These behaviors are related to pre-defined virtual objects on which runtime interactivity is allowed for user specific XR experiences. These behaviors are also time-evolving and are updated through the existing scene description update mechanism.

Avatar models can be used in scene description to exchange avatar instances in heterogeneous environments. For example, one can bring an avatar in a virtual shop to try on clothes. A user could want to test possibilities using different make-ups.

There are many solutions for signaling an avatar 3D model, made of a textured 3D mesh with components to animate it, like morph targets (or blendshapes) and skinning. As a result, an avatar model is a parametric model that can animate the avatar mesh given a set of parameters. For instance, for each morph target, the parameter is a weight, which can be used to apply the morph target. Similarly, parametric textures are linear combinations of textures where the parameters are the weights of the linear combination. For skinning, the parameters are the transforms applied to each joint of the avatar skeleton, where the transform can be, for example, a 3D rotation, a 3D translation, or a composition of the two. In most cases, all the animation parameters can be gathered as a set of floating point numbers, which can be the output of an automated process. In particular, an animation parameters predictor can be created to infer the animation parameters given inputs of various kinds, like a vector or an image, for example, a predictor can extract the face expression of a user from a webcam and translates it to morph target weights.

In the scope of avatar usage in virtual environments, there is a need for users to control an avatar using various input, for instance, a webcam, game pads or XR controllers. Given an avatar model, there are many existing solutions, which can be calibrated and/or trained to predict the avatar animation parameters given the input. In particular, neural networks such as MoFA (see an article by A. Tewari, et al., "MoFA: Model-based Deep Convolutional Face Autoencoder for Unsupervised Monocular Reconstruction," Proceedings of the IEEE International Conference on Computer Vision (ICCV), 2017, pp. 1274-1283) can be trained to infer (or predict) the avatar animation parameters (resulting in an avatar animation parameters predictor). Then, a user with an avatar model and the corresponding avatar animation parameters predictor can control the avatar using inputs, for instance, a webcam, game pads or XR controllers.

This works fine as long as the data is not shared with other users. For instance, if a user wants to transmit its avatar model and the corresponding avatar animation parameters predictor, there exist solutions for signaling the avatar model, but not for signaling the avatar animation parameters predictor. For instance, if the predictor is based on a neural network, a user can, for instance, send the weights of neural network, but there is no way for the receiver to use it without prior knowledge of the usage of the neural network. This is because most neural networks (NNs) can only work on specific data, and some input conversion may be required. For instance, a MoFA NN works on images of 224x224 with an aligned face: this is not what a webcam provides. As a result, one must ensure that a face is detected, cropped and aligned in webcam frames before being provided to the NN.

In fact, most of the time, neural networks cannot be used directly on the input data and need some preprocessing steps on the input and some postprocessing steps on the output of the neural network. Without signaling this information (e.g., preprocessing and postprocessing information), the receiver cannot use the predictor, or is limited to a fixed set of predictors. If a user wishes to send a neural network (and thus corresponding pre/post processing) that is unknown to the receiver, then the receiver cannot use it. For example, we may send the architecture and a set of neuron weights of the neural network, which do not define how the neural network must be used. In the scope we consider, most neural networks work on images of fixed size (like 224x224 pixels) and fixed color space (like RGB centered on some specific point), but there exist many webcams with many different resolutions and color spaces, and within the frames they capture, faces can have many different sizes.

To ensure avatar interoperability, where a user possesses data for an avatar, it is required that the avatar data contain everything an application needs to implement the expected features: the application must not have to provide extra data or make choices about possible setups.

The present document relates to the feature that enables the prediction of avatar animation parameters using various user inputs, for instance, a webcam, game pads or XR controllers. This prediction can be performed using various algorithms or processing steps. These processing steps work on specific data shaped in a specific way, different from the data directly provided by the user inputs. For instance, a neural network can only work on an aligned face crop from a video frame. The aligned face crop may need more information, for instance facial landmarks, which themselves may need another neural network and face crop to be predicted, and so on. The combination of these processing steps and corresponding parameters is very large, and cannot be resumed in a simple way, like a unique id for each combination.

The problem is then the signaling of all the processing steps and associated parameters involved in the prediction of the avatar parameters, as well as any required sub-processing (processing inside pre-processing or post-processing) steps and associated parameters.

In one embodiment, the avatar animation parameters predictor is signaled using a hierarchy of dictionaries (or objects) with string keys. This signaling allows an application who receives an avatar and the introduced signaling to predict the animation parameters of the avatar from an input, for instance video frames. Here, a dictionary is a collection that maps string keys to items. The value of a mapped item in dictionaries can be a number, a string, a dictionary or a list. A list can contain the same values as a dictionary. This representation can be encoded in formats such as JSON, YAML or XML.

### Structure

The main structure of the avatar model predictor signaling is the following one:

**Table 1 - The avatar animation parameters predictor root properties.**

| **Name** | **Type** | **Description** | **Required** |
|---|---|---|---|
| inputs | string [1-*] | List of user inputs. | Yes |
| steps | Processing [1-*] | List of processing steps to execute on the input. | Yes |
| functions | Function [1-*] | List of functions that can be used by processing steps. | Yes |

The "inputs" list contains the name of the user inputs required to run the prediction, which must be present in the initial processing data. For instance, if "inputs" contains "frame", the prediction needs a picture from a video frame. Extra information can also be provided: for instance, if a face detection is required, the face region can be put in a "faceRegion" item in "inputs". In another example, the "inputs" can be ["frame", "landmarks", "date"], and the application must provide the initial processing data for a frame, face landmarks, and today's date.

The "steps" list contains the definitions of processing steps. The execution of avatar animation parameters predictor is the execution of these processing steps, in the same order as the ones in the "steps" list.

The "functions" list contains the definitions of functions used by the processing steps.

### Processing steps

The aim of the proposed signaling is to encode an avatar animation parameters predictor. The prediction of the predictor given inputs is the result of the execution of successive processing steps. To illustrate this, here is an example of processing steps:
1. Face detection: compute the region of the largest face in the frame.
2. Facial landmark prediction: predict the location of facial landmarks in the frame, using the face region to determine which face to analyze.
3. Predict the avatar animation parameters using the face region and facial landmarks.

Processing steps operate on data represented as a dictionary of items with string keys, for instance a "frame" item can contain a video frame, a "faceRegion" item the frame region where the face is detected, etc. A processing step may add, update or remove one or more items in the dictionary. A processing step neither changes nor removes items in the dictionaries it does not use. If a processing step fails, it adds an "error" in the dictionary with an integer corresponding to the error code or a string with the error message.

The data processed by processing steps is initialized with a dictionary containing items that depend on the "inputs" root list. For instance, if "inputs" contains "frame", then the processing data is initialized with a "frame" item with the video frame or image data that may contain a face.

After the last main processing step, avatar animation parameters are found in the data in case of success. For instance, an item "avatarJointTransforms" can contain the list of avatar node transforms and "avatarMorphTargetWeights" the list of avatar morph target weights. In case of error, avatar animation parameters may not be present in the data and an item "error" is present with the code or message of the error.

Each processing step uses a function. A function step can have pre or post processing steps. For instance, the function of the third step in the example above needs a preprocessing step that extracts and aligns a cropped image of the face from the video frame. Then, the prediction is run on this cropped image. Finally, a postprocessing step is executed on the predicted parameters to cancel the effect of the alignment during the face cropping. This postprocessing step may involve, for instance, an update of the transform of a head joint to which the head mesh is attached as a skin.

A processing step is signaled using the following properties:

**Table 2 - Processing step properties.**

| **Name** | **Type** | **Description** | **Required** |
|---|---|---|---|
| function | string | Name of the function to execute. | Yes |
| parameters | string => value | Dictionary with string keys and value of any supported type, which override the default parameters of the function. | No |

The "function" property defines the name of the function to execute. As presented in the following, each function in the "functions" list at the root of the predictor properties (see Table 1) is defined with a unique name to identify it. The processing step executes the function with the name defined by "function".

The "parameters" dictionary defines overrides for the executed function parameters. For instance, let us consider a function with parameter "width" with default value 24, parameter "height" with default value 24 and parameter "method" with default value "slow". Then if "parameters" is { "width": 12, "method": "fast" }, then the default value of the "width" parameter of the function is replaced by 12, and the default value of the "method" parameter of the function is replaced by "fast". As a result, unless further parameter overriding, the function is executed using parameter "width" with value 12, parameter "height" with value 24 and parameter "method" with value "fast".

### Functions

Each function works on data represented as a dictionary of items with string keys. A function may add, update or remove one or more items in the dictionary. A function neither changes nor removes items in the dictionaries it does not use. If a function fails, it adds an "error" item in the dictionary with an error code or a string with the error message.

Each function can have parameters, also represented as a dictionary of items with string keys.

Each function can have a list of preprocessing and postprocessing steps, each one using a function. Preprocessing and postprocessing steps can work on the function data or can work on new data made of copies or references to items of the function data. The output of preprocessing and postprocessing steps are implicit when they directly work on the function data, or can add, update or remove items from the function data. Preprocessing and postprocessing steps can override one or more of the parameters of the functions they use.

These representations are not mandatory and used here to present how processing works. Different functions are presented here, but more can be added.

### Common properties

All functions are signaled with the following common properties:

**Table 3 - Properties common to all functions.**

| **Name** | **Type** | **Description** | **Required** |
|---|---|---|---|
| name | string | Defines the function name. | Yes |
| type | string | Defines the function type. | Yes |
| parameters | string => value | Dictionary with string keys and value of any supported type, which override the default parameters of the function. | No |
| preprocessing | PreProcessing | Defines the processing steps to execute before executing the function. | No |
| postprocessing | PostProcessing | Defines the processing steps to execute after executing the function. | No |

The "name" property defines the name of the function. It must be unique. Two functions cannot have the same name. The function name is used by the processing step to reference it.

The "type" property defines the type of the function. In the following, we introduce the following types: "faceDetection", "faceCrop", "facialLandmarksPrediction", "faceCropAlign", "alignInversion" and "avatarAnimationPrediction", but other function types can be proposed.

In some embodiments the "type" property is defined as an integer and points to an enum table that identifies different function types, e.g., "index 0: faceDetection", "index 1: faceCrop", "index 2: facialLandmarksPrediction", "index 3: faceCropAlign", "index 4: alignInversion", "index 5: avatarAnimationPrediction" and "index 6-N: Reserved for future versions". The last indices 6 through "N" are reserved for future implementations where "N" is a maximum value for the number of functions.

The "parameters" dictionary defines values for the parameters of the function that may override the default values. The possible items in this dictionary depend on the type of the function.

The "preprocessing" property defines the processing steps to execute before the function, and has the following properties:

**Table 4 - Preprocessing properties.**

| **Name** | **Type** | **Description** | **Required** |
|---|---|---|---|
| inputs | string => string | Data used as input of the preprocessing steps. | No |
| outputs | string => string | Defines how the data output by the preprocessing steps is used by the calling function. | No |
| steps | Processing [1-*] | Processing steps to execute for preprocessing. | Yes |

If the "inputs" dictionary is not present, then the function data is used by the preprocessing steps. In this case, "outputs" dictionary must not be present.

If the "inputs" dictionary is present, then new data is created based on the items in this dictionary and used as input for the preprocessing steps. The creation of the new data starts with an empty dictionary. Then, this new dictionary is filled with items defined in "inputs". Each item in "inputs" defines an item to add to the new dictionary with the same key. The value of an item is a copy of the item with the same key if the item in "inputs" is "copy". Similarly, the value of an item is a reference of the item with the same key if the item in "inputs" is "ref'. For example, if "inputs" has the following value:

| | |
|---|---|
| ```
 "inputs": {
   "frame": "ref",
   "faceRegion": "copy"
   }
``` | |

With this example of "inputs", the value of "frame" in the new dictionary is a reference to the value of "frame" in the function data. In this case, the process assumes that the preprocessing steps don't modify the value of "frame", so a copy would take unnecessary resources.

With this example of "inputs", the value of "faceRegion" in the new dictionary is a copy of the value of "faceRegion" in the function data. In this case, the process assumes that the preprocessing steps change the value of "faceRegion", while its value must not change in the function data.

If the "outputs" dictionary is present, then the function data is updated based on the items in "outputs". The principle is the same as the one of "inputs", except that moves are from the preprocessing data to the function data. For each item in "outputs", the corresponding item with the same key in function data is updated, depending on the value in "outputs". The value of an item is a copy of the item with the same key if the item in "outputs" is "copy". Similarly, the value of an item is a reference of the item with the same key if the item in "outputs" is "ref".

The "steps" list contains the processing steps to execute before the execution of the function.

The "postprocessing" property defines the processing steps to execute after the function, and has the following properties:

**Table 5 - Postprocessing properties.**

| **Name** | **Type** | **Description** | **Required** |
|---|---|---|---|
| inputs | string => string | Data used as input of the postprocessing steps. | No |
| outputs | string => string | Defines how the data output by the postprocessing steps is used by the calling function. | No |
| Steps | Processing [1-*] | Processing steps to execute for postprocessing. | Yes |

The mechanism of this property is the same as Preprocessing, except that the processing steps are executed after the function execution.

The followings present examples of functions. In each case, parameters and properties are presented. The values of parameters can be signaled in location where they can be overridden, like in the definition of the function (see Table 3) or in a processing step (see Table 2).

### Face detection

The face detection function detects a face in an image. If the detector finds more than one face, an algorithm is used to choose one, like the largest or the one with the highest confidence. The value of "type" property in this case is "faceDetection".

This function has the common properties of Table 3 and the following additional ones:

**Table 6 - Face detection properties.**

| **Name** | **Type** | **Description** | **Required** |
|---|---|---|---|
| method | string | A string which uniquely identifies the face detection method to use, e.g., the algorithm or neural network. Some methods may need a value from another parameter. | Yes |
| url | string | Universal Resource Locator where detector data can be found (for instance, the weights of a neural network). | No |
| backbone | string | Name of the backbone to use with a face detector neural network (like "resnet", "vgg", etc.). | No |

This function has the following parameters:

**Table 7 - Face detection parameters.**

| **Name** | **Type** | **Description** | **Required** |
|---|---|---|---|
| selection | string | Algorithm that chooses the face (for instance, "largest" or "best"). | No, default depends on the face detection method |
| threshold | number | A number to use for thresholding. Its value depends on the face detection method. | No, the default value depends on the face detection method |
| confidence | number | A number to use for confidence on the result of the face detection method. Its value depends on the face detection method. | No, the default value depends on the face detection method |

This function works on data in the following way:
Data used but not changed:
   - "frame": video frame data, for instance float tensor [frame height, frame width, #channels].
Data added or updated if existing:
   - "faceRegion": face region, for instance pixel coordinates (x1, y1, x2, y2), where (x1, y1) is the top left corner and (x2, y2) is the bottom right corner. If no face is detected, "faceRegion" is not added if not present in the data or removed if already present in the data.

### Face cropping

The crop function crops the video frame and adds it to functions data as a face crop. The value of the "type" property in this case is "faceCrop".

This function has the common properties of Table 3 and no additional ones.

This function has the following parameters:

**Table 8 - Face crop parameters.**

| **Name** | **Type** | **Description** | **Required** |
|---|---|---|---|
| size | number [2] | Crop size, for instance [crop height, crop width]. | No, the default value is [256, 256] |
| vertical Shift | number | Vertical shift to apply on the face region before cropping. If it is an integer, this is the number of pixels to shift. If it is a float | No, the default value is 0 |
| | | value in [-1, 1], then it is relative to the height of the face region. | |
| scaleFactor | number | Scale factor to apply on the face region before cropping. | No, the default value is 1.0 |

This function works on data in the following way:
Data used but not changed:
   - "frame": video frame data, for instance float tensor [frame height, frame width, #channels].
   - "faceRegion": define region to crop, for instance pixel coordinates (x1, y1, x2, y2) where (x1, y1) is the top left corner and (x2, y2) is the bottom right corner.
Data added or updated if existing:
   - "faceCrop": crop image data, for instance float tensor [crop height, crop width, #channels].
   - "faceCropTransform": transform used to get the crop from the frame, for instance affine matrix.

### Facial landmarks prediction

The facial landmarks prediction function predicts location of facial landmarks in an image. The value of "type" property in this case is "facialLandmarksPrediction".

This function has the common properties of Table 3 and the following additional ones:

**Table 9 - Face detection properties.**

| **Name** | **Type** | **Description** | **Required** |
|---|---|---|---|
| method | string | A string which uniquely identifies the facial landmarks prediction method to use, e.g., the algorithm or neural network. Some methods may need a value from another parameter. | Yes |
| url | string | Universal Resource Locator where detector data can be found (for instance, the weights or a neural network). | No |
| backbone | string | Name of the backbone to use with a facial landmarks neural network predictor(like "resnet", "vgg", etc.). | No |

This function has the following parameters:

**Table 10 - Face detection parameters.**

| **Name** | **Type** | **Description** | **Required** |
|---|---|---|---|
| selection | string | Algorithm that chooses the face (for instance, "largest" or "best"). | No, the default value depends on the facial landmarks prediction method |
| threshold | number | A number to use for thresholding. Its value depends on the facial landmarks prediction method. | No, the default value depends on the facial landmarks prediction method |
| confidence | number | A number to use for confidence. Its value depends on the facial landmarks prediction method. | No, the default value depends on the facial landmarks prediction method |

This function works on data in the following way:
Data used but not changed:
   - "faceRegion": face region, for instance pixel coordinates (x1, y1, x2, y2), where (x1, y1) is the top left corner and (x2, y2) is the bottom right corner.
   - "faceCrop": image with face, for instance float tensor [crop height, crop width, #channels].
Data added or updated if existing:
   - "facialLandmarks": facials landmarks, for instance a list of vectors, where each vector holds the coordinates of a facial landmark. If there are no facial landmarks detected, "facialLandmarks" is not added if not present in the data or removed if already present in the data.

### Aligned face cropping

The aligned crop function crops the video frame and adds it to functions data as a face crop. Contrary to the (unaligned) face cropping function, this function uses facials landmarks to rotate and scale the face so that it is aligned to a model (e.g., the eyes and nose are positioned at a specific location). The value of the "type" property in this case is "faceCropAlign".

This function has the common properties of Table 3 and the following additional ones:

**Table 11 - Aligned face cropping properties.**

| **Name** | **Type** | **Description** | **Required** |
|---|---|---|---|
| facialLandmarks | string => number[2-3] | Locations of each reference landmark. For instance { "leftEye" => [0.375, 0.4296875] } defines the location of the left eye to relative coordinates (0.375, 0.4296875). | No |

This function has the following parameters:

**Table 12 - Face crop parameters.**

| **Name** | **Type** | **Description** | **Required** |
|---|---|---|---|
| size | number [2] | Crop size, for instance [crop height, crop width]. | No, default [256, 256] |
| verticalShift | number | Vertical shift to apply on the face region before cropping. If it is an integer, this is the number of pixels to shift. If it is a float value in [-1, 1], then it is relative to the height of the face region. | No, the default value is 0 |
| scaleFactor | number | Scale factor to apply on the face region before cropping. | No, the default value is 1.0 |

This function works on data in the following way:
Data used but not changed:
   - "frame": video frame data, for instance float tensor [frame height, frame width, #channels].
   - "faceRegion": region to crop, for instance pixel coordinates (x1, y1, x2, y2), where (x1, y1) is the top left corner and (x2, y2) is the bottom right corner.
   - "facialLandmarks": facials landmarks, for instance a list of vectors, where each vector holds the coordinates of a facial landmark.
Data added or updated if existing:
   - "faceCrop": crop image data, for instance float tensor [crop height, crop width, #channels].
   - "faceCropTransform": transform used to get the crop from the frame, for instance affine matrix.

### Face alignment inversion

This function inverts the effect of alignment on affected data, like the location of facial landmarks or joint transforms of the avatar. The value of "type" property in this case is "alignInversion".

This function has the common properties of Table 3 and no additional ones.

This function has no parameters.

This function works on data in the following way:
Data added or updated if existing:
- "faceCropTransform": transform used to get the crop from the frame, for instance an affine matrix.
- "facialLandmarks": facials landmarks, for instance a list of vectors, where each vector holds the coordinates of a facial landmark.
- "avatarJointTransforms": avatar joint transforms, for instance a list of affine transforms.

### Avatar animation prediction

This function predicts the avatar animation parameters using data available in the current function data, like an image with the cropped face. The value of the "type" property in this case is "avatarAnimationPrediction".

This function has the common properties of Table 3 and the following additional ones:

**Table 13 - Face detection properties.**

| **Name** | **Type** | **Description** | **Required** |
|---|---|---|---|
| method | string | A string which uniquely identifies the method used for predicting the avatar animation parameters, e.g., the algorithm or neural network. Some methods may need a value from another parameter. | Yes |
| url | string | Universal Resource Locator where predictor data can be found (for instance, the weights of a neural network). | No |
| backbone | string | Name of the backbone to use with the animation parameter predictor (like "resnet", "vgg", etc.). | No |

This function has no parameters.

This function works on data in the following way:
Data used but not changed:
   - "faceCrop": crop image data, for instance float tensor [crop height, crop width, #channels].
Data added or updated if existing:
   - "avatarJointTransforms": avatar joint transforms, for instance a list of affine transforms.
   - "avatarMorphTargetWeights": avatar morph target weights, for instance a list of weights.

### Processing model

### Main processing

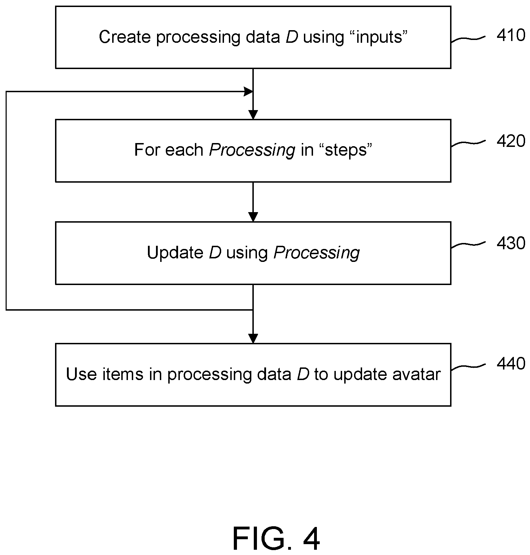

FIG. 4 illustrates the execution of the animation parameter prediction using proposed signaled data and user inputs, according to an embodiment. At step 410, the processing data is initialized using items in the "inputs" root property (see Table 1). Depending on these items, the processing data can be filled with user data, like a video if "frame" is in "inputs". At steps 420 and 430, each processing step (as defined in Table 2) in the "steps" root list (see Table 1) is executed to update the processing data. Processing step execution is described in the follows. At step 440, unless "error" is in the processing data, application takes values from items in the resulting data to update avatar. For instance, if there is "avatarMorphTargetWeights" in the processing data, then the application can update the morph target weights of the avatar model.

### Processing step execution

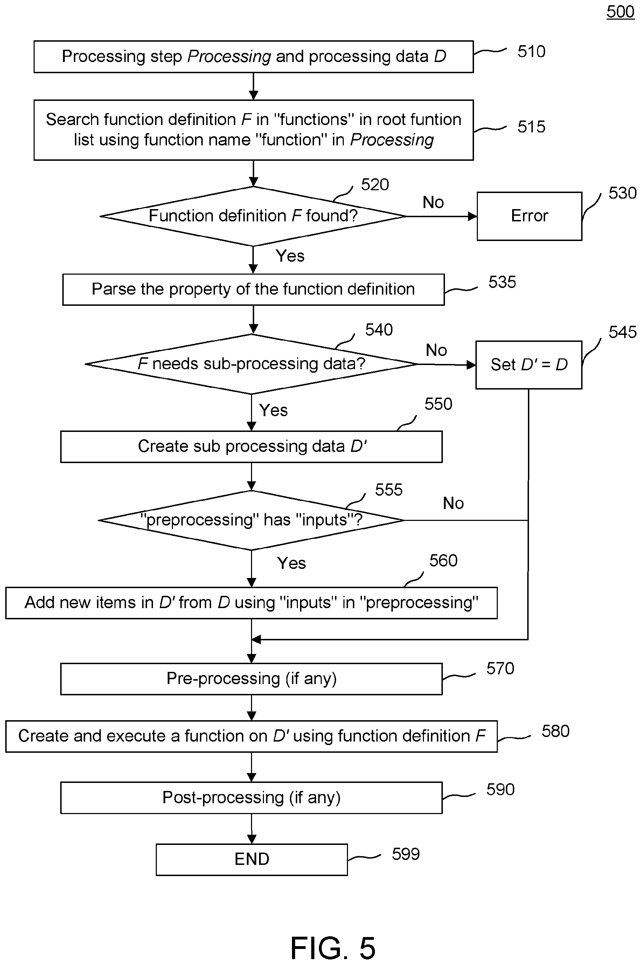

FIG. 5 illustrates method 500 for the execution of a processing step, according to an embodiment. Method 500 can be used in steps 420 and 430 in FIG. 4.

As shown in 510, this process needs a processing step (as defined in Table 2) and processing data (e.g., a dictionary of items with string keys). A processing step can be of any source; it can be one of the main processing steps or from the pre- or postprocessing step of a function for instance. The origin of the processing data is generic; for instance, it can be the main processing data or a sub-processing data created during the execution of a function.

The "function" property of the processing step (see Table 2) is used to search (515) the function definition in the "functions" root list (see Table 1). If not found (520), an "error" item is added (530) to the processing data indicating that the function was not found, and the execution stops. If found (520), all the property of the function definition are parsed (535, see Table 3).

The creation and use of sub-processing data is required if the function definition has (540) an "inputs" or "outputs" property in its "preprocessing" property (if any) or an "inputs" or "outputs" property in its "postprocessing" property (if any).

At step 550, it is determined that sub-processing data is required, and a new one is created with no content. If no sub-processing data is required, then all the following execution will be directly on (545) the processing data (e.g., the sub-processing data is the processing data).

If the function definition has (555) a "preprocessing" property (see Table 3) with an "inputs" property (see Table 4), then items are copied or referenced (560) from the processing data to the sub-processing data as described before.

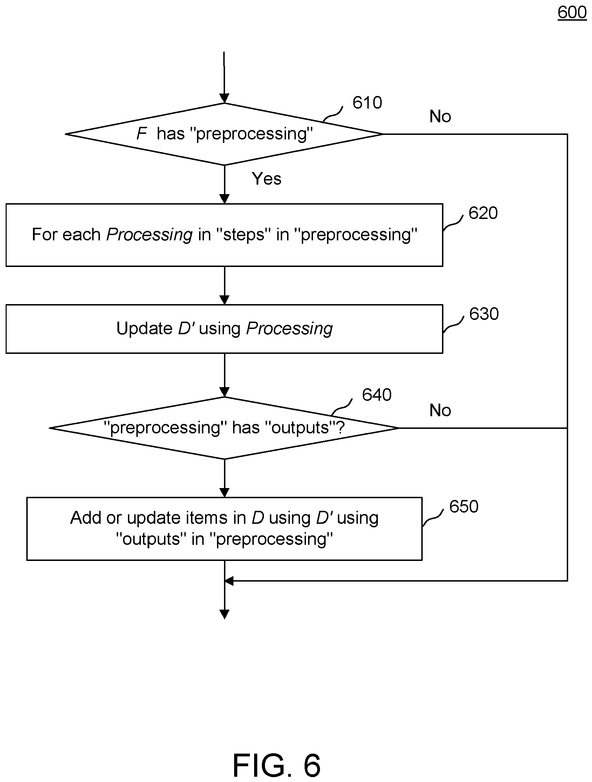

The preprocessing is executed (570) if there is any, as will be illustrated in further detail in FIG. 6.

At step 580, a function is created using the function definition and a set of parameters. The function type and its default parameters depend on the "type" property in the function definition (see Table 3). The function parameters can be modified using the "parameters" property in the function definition, if present (see Table 3). The function is executed on the sub processing data.

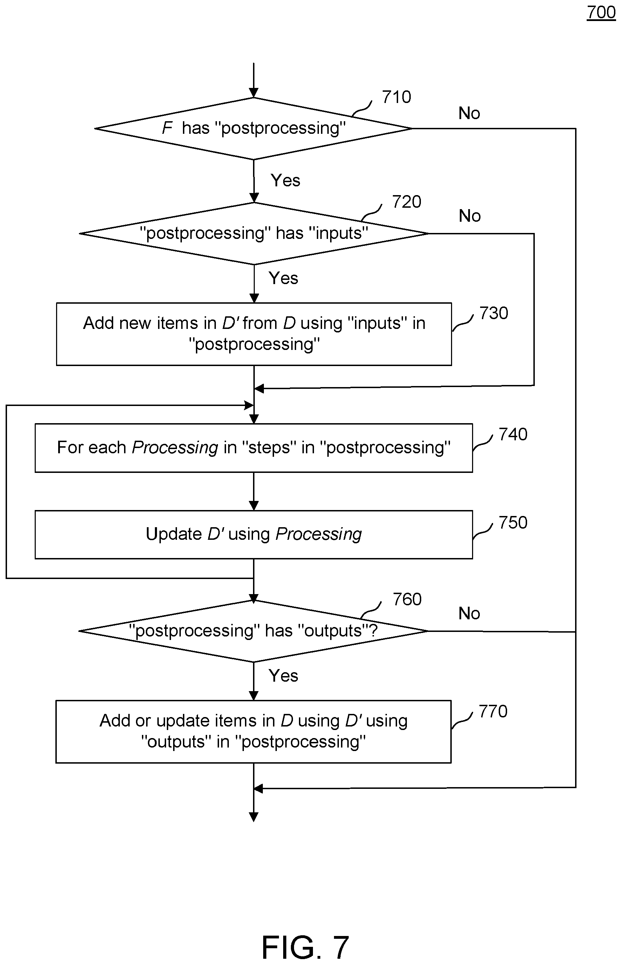

At step 590, the post-processing is executed if there is any, as will be illustrated in further detail in FIG. 7.

The processing step ends at step 599, where the output is the items in the processing data.

FIG. 6 illustrates method 600 for the execution of a preprocessing step, according to an embodiment. Method 600 can be used in step 570 in FIG. 5.

If the function definition has a "preprocessing" property (610), then each processing step in the "steps" list of the preprocessing (see Table 4) is executed (620, 630) using the process described herein (e.g., in a hierarchical fashion), using the sub-processing data as the processing data of the sub-steps.

If the function definition has a "preprocessing" property (see Table 3) with an "outputs" property (640, see Table 4), then items are copied or referenced (650) from the sub processing data to processing data as described before.

FIG. 7 illustrates method 700 for the execution of a postprocessing step, according to an embodiment. Method 700 can be used in step 590 in FIG. 5.

If the function definition has (710) a "postprocessing" property (see Table 3) with an "inputs" property (720, see Table 5), then items are copied or referenced (730) from the processing data to the sub-processing data as described before.

Then each processing step in the "steps" list of the postprocessing (see Table 5) is executed (740, 750) using the process described herein (e.g., in a hierarchical fashion), using the sub-processing data as the processing data of the sub-steps.

If the function definition has an "outputs" property (760, see Table 5), then items are copied or referenced (770) from the sub processing data to processing data as described before.

### Encoding

The animation parameters predictor encoding is performed by an application given the user input type and a prediction method. In many cases, the prediction method can not be directly applied to the user input. For instance, many neural networks work on small image of fixed size (like 224x224 or 512x512 pixels) with a centered face. On the other hand, if the user provides frames from a webcam, the resolution is different (like 1920x1080 pixels) and the user face is not centered (anywhere in the video frames captured by the webcam). Similarly, if the user uses XR controllers, they may not suit the selected prediction method, in which case a translation or conversion is required. In all cases, the application can determine the required processing to build a working animation parameters predictor and transmit it using the proposed signaling.

### Example 1

The following listing presents the signaling of an avatar animation parameters prediction based on MoFA and aligned face cropping using facial landmarks.

| |
|---|
| ```
 {
   "inputs": [
      "frame"
   ],
   "functions": [
     {
        "name": "detect",
        "type": "faceDetection",
        "method": "retina",
        "backbone": "resnet50",
        "url": "http://somemodelzoo.com/Resnet50_Final.pth"
      },
     {
        "name": "crop",
        "type": "facecrop"
      },
     {
        "name": "landmarks",
        "type": "facialLandmarksPrediction",
        "method": "fan",
        "url": "http://somemodelzoo.com/3DFAN-4.pth.tar",
        "preprocessing": {
          "steps": [
             {
               "function": "crop",
               "parameters": {
                  "size": [256, 256],
                  "verticalshift": -0.12,
                  "scaleFactor": 0.95
               }
             } ]
        }
      },
     {
        "name": "align",
        "type": "faceCropAlign",
        "facialLandmarks": {
          "leftEye": [0.375, 0.4296875],
          "rightEye": [0.625, 0.4296875],
          "nose": [0.5, 0.546875]
        }
      },
     {
        "name": "invert",
        "type": "alignInversion"
``` |
| ```
      },
     {
        "name": "predict",
        "type": "avatarAnimationPrediction",
        "method": "mofa",
        "backbone": "mobilenet0.25",
        "url": "http://somemodelzoo.com/mofa3-aligned.tar",
        "preprocessing": {
          "inputs": {
             "frame": "ref",
             "faceRegion": "copy"
          },
          "steps": [
             {
               "function": "align",
               "parameters": {
                  "size": [256, 256]
               } } ] },
        "postprocessing": {
          "outputs": {
             "avatarMorphTargetWeights": "ref",
             "avatarJointTransforms": "ref"
          },
          "steps": [
             {
               "function": "invert"
             }
        ] }
      }
   ],
   "steps": [
     {
        "function": "detect"
      },
     {
        "function": "landmarks"
      },
     {
        "function": "predict"
      }
 ] }
``` |

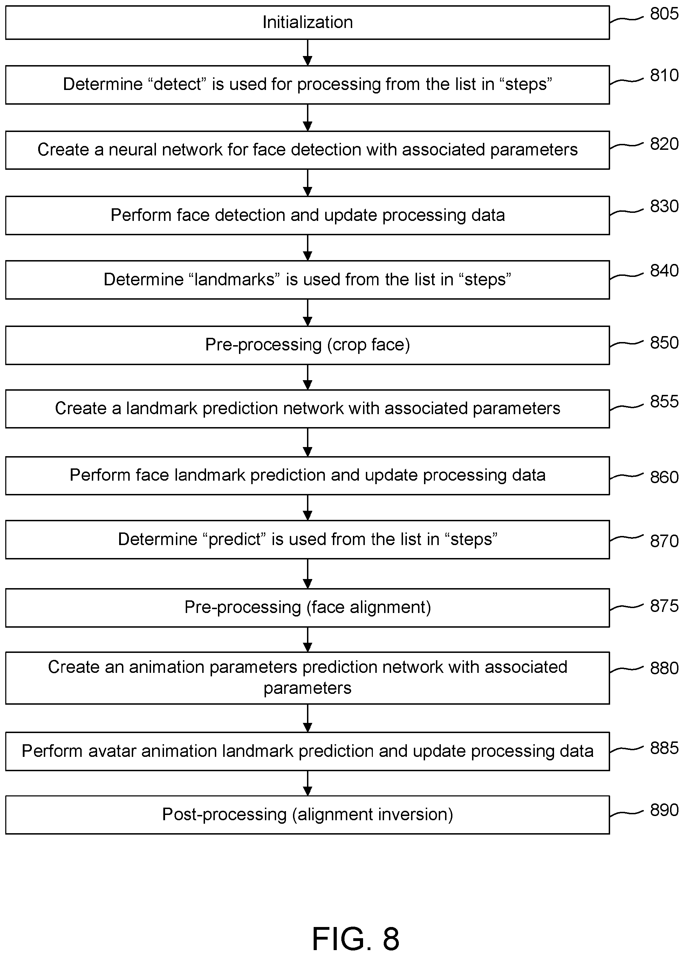

This example is also illustrated in FIG. 8 and described in detail below.

### Initialization

The processing starts with the creation of an initial processing/function data (805):

**Table 14 - Example 1: initial processing data.**

| **Name** | **Type** | **Description** |
|---|---|---|
| frame | float tensor [frame height, frame width, #channels] | Video frame or image data, as provided by a webcam or an XR sensor. |

### First main processing step: Face detection

Then the first item in the "steps" root list is parsed (810): the function is "detect". The parser finds this function as the first item of the "functions" root list. The "type" is "faceDetection", which means that this function is for face detection. The method used is "retina" with a "resnet50" backbone. The corresponding neural network is created, and its weights are set with the file "http://somemodelzoo.com/Resnet50_Final.pth" (820). The face detection algorithm is run and update the processing data (830) in the following way:

**Table 15 - Example 1: processing data after the first main processing step.**

| **Name** | **Type** | **Description** | **Evolution** |
|---|---|---|---|
| frame | float tensor [frame height, frame width, #channels] | Video frame or image data, as provided by a webcam or an XR sensor. | Unchanged |
| faceRegion | number [4] | Pixel coordinates (x1, y1, x2, y2) where (x1, y1) is the top left corner and (x2, y2) is the bottom right corner of the face. | Added |

### Second main processing step: Facial landmarks prediction

The second item of the "steps" root list is parsed (840): the function is "landmarks". The parser finds this function as the third item of the "functions" root list. The "type" is "facialLandmarksPrediction", which means that this function is for facial landmarks prediction.

This function has a "preprocessing" property: processing steps in this property are executed (850) before the function. In this case, there are no "inputs" or "outputs" properties in "preprocessing", so the preprocessing steps are run on the main processing data. There is a single preprocessing step with function "crop" and parameters "size" with value [256,256], "verticalShift" with value -0.12 and "scaleFactor" with value 0.95. The face cropping is executed and the main processing data become:

**Table 16 - Example 1: processing data after the preprocessing of the second main processing step.**

| **Name** | **Type** | **Description** | **Evolution** |
|---|---|---|---|
| frame | float tensor [frame height, frame width, #channels] | Video frame or image data, as provided by a webcam or an XR sensor. | Unchanged |
| faceRegion | number [4] | Pixel coordinates (x1, y1, x2, y2) where (x1, y1) is the top left corner and (x2, y2) is the bottom right corner of the face. | Unchanged |
| faceCrop | float tensor [256, 256, #channels] | Crop image data. | Added |

After this preprocessing, the landmark prediction network is created (855) using the "fan" approach. The weights are set with the file "http://somemodelzoo.com/3DFAN-4.pth.tar". The facial landmarks prediction algorithm is run and update the main processing data (860) in the following way:

**Table 17 - Example 1: processing data after the second main processing step.**

| **Name** | **Type** | **Description** | **Evolution** |
|---|---|---|---|
| frame | float tensor [frame height, frame width, #channels] | Video frame or image data, as provided by a webcam or an XR sensor. | Unchanged |
| faceRegion | number [4] | Pixel coordinates (x1, y1, x2, y2) where (x1, y1) is the top left corner and (x2, y2) is the bottom right corner of the face. | Unchanged |
| faceCrop | float tensor [256, 256, #channels] | Crop image data. | Unchanged |
| facialLandm arks | float tensor [68, 3] | Facial landmarks 3D coordinates. | Added |

### Third main processing step: Animation parameters prediction

The third item of the "steps" root list is parsed (870): the function is "predict". The parser finds this function as the sixth item of the "functions" root list. The "type" is "avatarAnimationPrediction", which means that this function is for avatar animation parameters prediction.

This function has a "preprocessing" property: processing steps in this property are executed (875) before the function. In this case, there are "inputs" and "outputs" properties in "preprocessing", in which case a temporary sub processing data is created. Considering the "inputs" property, it is initialized with the following content:

**Table 18 - Example 1: initial sub-processing data of the third main processing step.**

| **Name** | **Type** | **Description** | **Evolution** |
|---|---|---|---|
| frame | float tensor [frame height, frame width, #channels] | Video frame or image data, as provided by a webcam or an XR sensor. | Added (reference to main) |
| faceRegion | number [4] | Pixel coordinates (x1, y1, x2, y2) where (x1, y1) is the top left corner and (x2, y2) is the bottom right corner of the face. | Added (copy from main) |

The preprocessing has a single step with function "align" with parameter "size" with value [256, 256]. A face crop with alignment function is then run and leads to the following data:

**Table 19 - Example 1: sub-processing data of the third main processing step after the preprocessing.**

| **Name** | **Type** | **Description** | **Evolution** |
|---|---|---|---|
| frame | float tensor [frame height, frame width, #channels] | Video frame or image data, as provided by a webcam or an XR sensor. | Unchanged (reference to main) |
| faceRegion | number [4] | Pixel coordinates (x1, y1, x2, y2) where (x1, y1) is the top left corner and (x2, y2) is the bottom right corner of the face. | Unchanged |
| faceCrop | float tensor [256, 256, #channels] | Crop image data. | Added |
| faceCropTransform | float tensor [4, 4] | Affine matrix | Added |

The preprocessing has no "outputs" properties, so there is no data to transfer from the sub-processing data to the main processing data at this point.

After this preprocessing, the avatar animation parameters prediction network is created (880) using the "mofa" approach. The weights are set with the file "http://somemodelzoo.com/mofa3-aligned.tar". The avatar animation parameters prediction algorithm is run and update the sub processing data (885) in the following way:

**Table 20 - Example 1: sub-processing data of the third main processing step after running the function.**

| **Name** | **Type** | **Description** | **Evolution** |
|---|---|---|---|
| frame | float tensor [frame height, frame width, #channels] | Video frame or image data, as provided by a webcam or an XR sensor. | Unchanged (reference to main) |
| faceRegion | number [4] | Pixel coordinates (x1, y1, x2, y2) where (x1, y1) is the top left corner and (x2, y2) is the bottom right corner of the face. | Unchanged |
| faceCrop | float tensor [256, 256, #channels] | Crop image data. | Unchanged |
| faceCropTransform | float tensor [4, 4] | Affine matrix | Unchanged |
| avatarMorphTarget Weights | float tensor [#morphTargets] | Avatar morph target weights. | Added |
| avatarJointTransfor ms | float tensor [#joints, 4, 4] | Avatar joint matrix transforms. | Added |

This function has a postprocessing step. This postprocessing has no "inputs" properties, so there is no data to transfer from the main processing data to the sub-processing data at this point. The postprocessing has a single step with function "invert", which is run (890) to invert the effect of alignment on affected values (like avatarJointTransforms). After running the function of the postprocessing, the sub-processing data is:

**Table 21 - Example 1: sub-processing data of the third main processing step after running the function of the postprocessing.**

| **Name** | **Type** | **Description** | **Evolution** |
|---|---|---|---|
| frame | float tensor [frame height, frame width, #channels] | Video frame or image data, as provided by a webcam or an XR sensor. | Unchanged (reference to main) |
| faceRegion | number [4] | Pixel coordinates (x1, y1, x2, y2) where (x1, y1) is the top left corner and (x2, y2) is the bottom right corner of the face. | Unchanged |
| faceCrop | float tensor [256, 256, #channels] | Crop image data. | Unchanged |
| faceCropTransform | float tensor [4, 4] | Affine matrix | Unchanged |
| avatarMorphTargetWe ights | float tensor [#morphTargets] | Avatar morph target weights. | Unchanged |
| avatarJointTransforms | float tensor [#joints, 4, 4] | Avatar joint matrix transforms. | Updated |

The postprocessing has an "ouputs" property, with two items "avatarMorphTargetWeights" and "avatarJointTransforms" with a "ref' value, meaning that these two values must be transferred to the main processing data. Since the value is "ref", there is no need to do a copy. After this transfer, the main processing data is (and the final data since this is the last step):

**Table 22 - Example 1: processing data after the third main processing step.**

| **Name** | **Type** | **Description** | **Evolution** |
|---|---|---|---|
| frame | float tensor [frame height, frame width, #channels] | Video frame or image data, as provided by a webcam or an XR sensor. | Unchanged |
| faceRegion | number [4] | Pixel coordinates (x1, y1, x2, y2) where (x1, y1) is the top left corner and (x2, y2) is the bottom right corner of the face. | Unchanged |
| faceCrop | float tensor [256, 256, #channels] | Crop image data. | Unchanged |
| facialLandmarks | float tensor [68, 3] | Facial landmarks 3D coordinates. | Unchanged |
| avatarMorphTarget Weights | float tensor [#morphTargets] | Avatar morph target weights. | Added |
| avatarJointTransfor ms | float tensor [#joints, 4, 4] | Avatar joint matrix transforms. | Added |

### Use case

An avatar representation format is considered, which refers to topology of the 3D mesh representing the avatar, the topology of the skeleton used to animate the mesh, as well as additional metadata describing semantic properties of the avatar such as a segmentation of the mesh into body parts, a set of keypoints specifying person-generic anchor locations on the body, or a semantic description of blendshapes (or morph targets).

A base avatar model is considered, which refers to the elements that specify the geometry and texture of the avatar mesh at rest, i.e., in a reference body pose and a neutral facial expression. These elements include the positions of the mesh vertices at rest, the set of mesh vertex deformations associated to each blendshape, the bind pose matrices that specify the transformations of the mesh vertices from world space to bone-local space, the mapping of mesh vertices to joints used for skin animation, the texture image and the associated UV maps that define the texture of the avatar mesh. The base avatar model conforms to a predetermined avatar representation format.

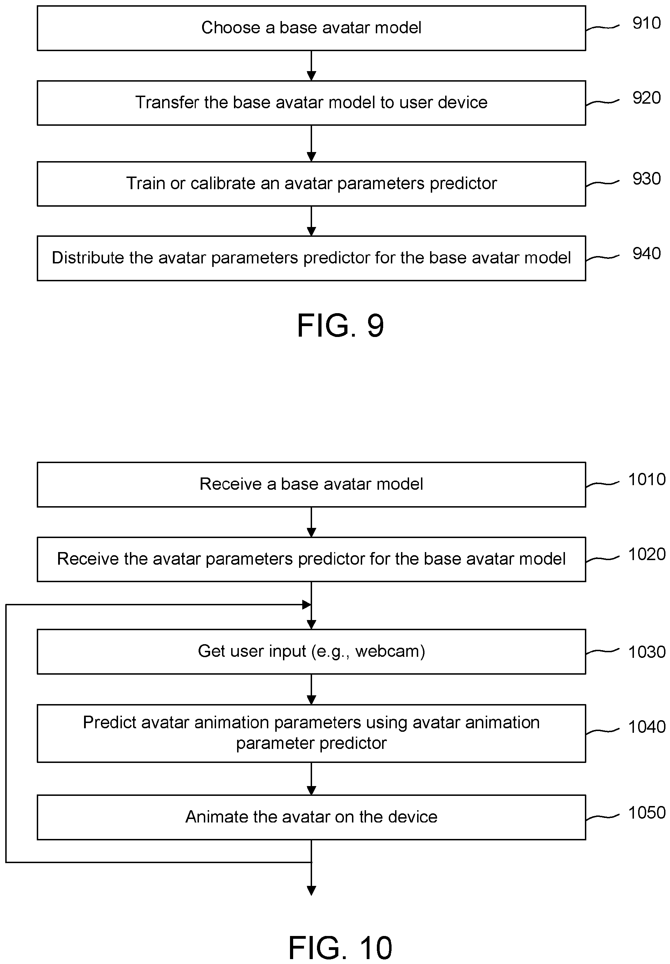

FIG. 9 and FIG. 10 illustrate the distribution of the avatar models and avatar parameters predictor on the server and user device sides, respectively, according to an embodiment. An application or service distributes base avatar models. A user of this service can choose (910) one of them and transfer (920) it to its device. The base avatar model can be transmitted (920) from the application to the user using existing solutions. The application chooses an avatar animation parameters method, like MoFA presented earlier. Then, depending on this method, a prediction procedure is defined to connect the user input type and the input format expected by the prediction method.

For instance, if the user uses a webcam and the method is MoFA, a face cropping and alignment from a video frame is required: these steps and associated parameters are determined by the application (930). Then, the application or service also distributes (940) a specification of the avatar parameters predictor using the description scheme proposed in this document. In this case, the user can transfer to his or her device the predictor corresponding to the base avatar model (s)he received (1010, 1020), and use it to predict (1040) its parameters, for instance to animate (1050) it on its device or remote devices (like in a game or videoconference).

For instance, if the user input is a webcam and the prediction method is MoFA, then each video frame of the webcam is given to the avatar animation parameters predictor, which returns the avatar animation parameters, in this case the morph target weights and the node transform of the neck joint. These weights and transform are used on the base avatar model to get the avatar in a different state and pose at each frame. In many cases, the same predictor can work for all base avatar models that conform to the same avatar representation format. That means that the application or service can perform (930) the training or calibration (usually a costly process) of the predictor for an avatar representation format and transfer it (using the proposal) to users. Thanks to this service, users can predict the parameters of their avatars, without the need for a device that can handle the training or calibration of an avatar parameters predictor.

Various numeric values are used in the present application. The specific values are for example purposes and the aspects described are not limited to these specific values.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method, comprising:
obtaining an avatar model;
obtaining information indicating a list of functions to be performed;
obtaining parameters associated with functions in the list of functions;
for each function in the list of functions,
creating the function with associated parameters, and
executing the function to obtain processed data as input to next function in the list of functions when a current function is not a last function in the list of functions or as output parameters when the current function is the last function in the list of functions; and animating the avatar model based on the output parameters.

2. A method, comprising:
obtaining an avatar model;
obtaining a user input type and a prediction method;
generating information indicating a list of functions based on the user input type and the prediction method;
generating parameters associated with functions in the list of functions, wherein output of a function in the list of functions is to be used as input to next function in the list of functions when a current function is not a last function in the list of functions, and wherein a last function in the list of functions corresponds to a function to infer animation parameters of the avatar model; and
outputting the information indicating the list of functions and the associated parameters.

3. An apparatus, comprising one or more processors and at least one memory coupled to the one or more processors, wherein the one or more processors are configured to:
obtain an avatar model;
obtain information indicating a list of functions to be performed;
obtain parameters associated with functions in the list of functions;
for each function in the list of functions,
create the function with associated parameters, and
execute the function to obtain processed data as input to next function in the list of functions when a current function is not a last function in the list of functions or as output parameters when the current function is the last function in the list of functions; and animate the avatar model based on the output parameters.

4. An apparatus, comprising one or more processors and at least one memory coupled to the one or more processors, wherein the one or more processors are configured to:
obtain an avatar model;
obtain a user input type and a prediction method;
generate information indicating a list of functions based on the user input type and the prediction method;
generate parameters associated with functions in the list of functions, wherein output of a function in the list of functions is to be used as input to next function in the list of functions when a current function is not a last function in the list of functions, and wherein a last function in the list of functions corresponds to a function to infer animation parameters of the avatar model; and
output the information indicating the list of functions and the associated parameters.

5. The method of claim 1 or 2, or the apparatus of claim 3 or 4, wherein the function is defined in a hierarchical fashion.

6. The method of any one of claims 1, 2 and 5, or the apparatus of any one of claims 3-5, wherein the output parameters include avatar animation parameters.

7. The method of any one of claims 1, 2, 5 and 6, or the apparatus of any one of claims 3-6, wherein the information indicates a name and a type for each function in the list of functions.

8. The method of any one of claims 1, 2 and 5-7, wherein the executing the function comprises, or the apparatus of any one of claims 3-7, wherein the one or more processors are further configured to perform:
preprocessing for the function, responsive to a preprocessing property associated with a current function.

9. The method of any one of claims 1, 2 and 5-8, wherein the executing the function comprises, or the apparatus of any one of claims 3-7, wherein the one or more processors are further configured to perform:
postprocessing for the function, responsive to a postprocessing property associated with a current function.

10. The method of any one of claims 1, 2 and 5-9, or the apparatus of any one of claims 3-9, wherein a first function corresponds to face detection.

11. The method of any one of claims 1, 2 and 5-10, or the apparatus of any one of claims 3-10, wherein a second function corresponds to face landmark prediction.

12. The method of any one of claims 1, 2 and 5-11, or the apparatus of any one of claims 3-11, wherein a third function corresponds to a neural network for inferring avatar animation parameters.

13. The method of any one of claims 1, 2 and 5-12, or the apparatus of any one of claims 3-12, wherein the information further indicates input data to be processed by the list of functions.

14. The method of any one of claims 1, 2 and 5-13, or the apparatus of any one of claims 3-13, wherein a function is based on a neural network, and associated parameters for the neural network include at least one of weights of the neural network and a backbone of the neural network.

15. A signal, comprising:
information indicating an avatar model;
information indicating a list of functions; and
parameters associated with functions in the list of functions, wherein output of a function in the list of functions is to be used as input to next function in the list of functions when a current function is not a last function in the list of functions, and wherein a last function in the list of functions corresponds to a function to infer animation parameters of the avatar model.
